# EUROPEAN PATENT APPLICATION

(11) **EP 1 146 020 A1**
(43) Date of publication of application: **17.10.2001**
(21) Application number: 00105997.1
(22) Date of filing: 27.03.2000
(51) Int. Cl.: C04B 7/43

(54) **Method of increasing the clinker output of an existing cement plant**

(71) Applicant: ALSTOM Power N.V., 1101 CS Amsterdam (NL)
(72) Inventor: Malfa, Enrico, 24050 Zanica (BG) (IT); Toqan, Majed, 78170 La Celle St. Cloud (FR)
(74) Representative: Pöpper, Evamaria, Dr.

(57) **Abstract**

In a method of increasing the clinker output of an existing cement plant, a raw mix feedstock is preheated in a first preheater (70) with kiln exhaust gases. The preheated raw mix feedstock is calcined, then burned in a rotary kiln (16) to form clinker. The clinker is cooled in a clinker cooler (20). The calcined raw meal - consisting essentially of lime and combustion residues like ash, carbon and desulfurization residues - is fed in a second preheater (50), in which process air from the clinker cooler (20) is directed in countercurrent flow to the direction of flow of the calcined raw meal. The calcined preheated raw meal is forwarded to the rotary kiln.

## Description

### Field of the invention

The invention relates to a method of increasing the clinker output of an existing cement plant with at least one production line, said method comprising the steps of preheating a raw mix feedstock in a first preheater with kiln exhaust gases, calcining the preheated raw mix feedstock, burning the calcined feedstock in a rotary kiln to form clinker, and then cooling the clinker in a clinker cooler.

### Discussion of Background

In prior art cement plants the cement raw meal is introduced at an inlet at the top of the preheater, passing through the preheater in counter-current with the exhaust gases from the kiln. The exhaust gases are drawn up through the pre-heater and discharged by means of an exhaust gas fan. The raw meal is conveyed from the preheater to the rotary kiln where, by means of heat from a burner, the raw meal is burnt into clinker. The clinker drops into the cooler where it is cooled using air.

It is known in cement technology that many materials for cement clinker manufacture contain secondary constituents such as alkali compounds, chlorine, sulfur, heavy metals, etc. which evaporate in the region of the sintering zone as alkali chloride and alkali sulfate compounds. They condense again in the preheating region and thus build circulations, which not only adversely affect the quality of the cement clinker, but also can also considerably damage the process itself. To suppress an alkali circulation in a cement clinker combustion apparatus, as well as to reduce the alkali content in the cement clinker, it is known to bifurcate and lead away a part of the kiln exhaust containing alkali compounds through what is known as a gas bypass (5-20% of kiln gas).

Particularly in connection with the raw material with a high content of sulfate, it is very important to control temperature variations in the burning zone. This is due to the tendency of the sulfate to decompose into SO₂ in the burning zone (1200-1400°C) and to condense in the cooler regions of the kiln (700-900°C).

When the burning zone temperature is increased, the evaporation of SO₂ will increase, which will result in higher concentrations of sulfates in the cooler regions of the kiln. It has been found that in the presence of significant concentrations of sulphurous material in the preheating zone, the condensation of chlorides on the preheater feedstock particles results in the formation of a minor, but significant, quantity of a melt phase at temperatures as low as 680°C, which, upon reaction with the oxide components in the feedstock at the high CO₂ partial pressures prevailing in the suspension preheater cyclones, solidifies through the formation of the mineral spurrite (2C2S .CaCO₃). With more than 5% spurrite in the feedstock the situation may become so critical that continued kiln operation becomes impossible because of ring formations in the kiln or the formation of build-ups or blockages in the preheater system.

If the burning zone temperature has decreased too much, a severe dust circulation between kiln and cooler may result and continued kiln operation becomes impossible unless the sulfate input is reduced or eliminated.

### Summary of the invention

Accordingly, the object of the invention is to increase the clinker output of an existing cement plant by utilizing major parts of the plant unchanged and without the need of calcining the raw material used to increase the output, and to reduce considerably the above described disadvantages.

This is achieved, according to the invention, by feeding calcined raw meal consisting essentially of lime and combustion residues like ash, carbon and desulfurization residues in a second preheater, in which process air from the clinker cooler is directed in countercurrent flow to the direction of flow of the calcined raw meal, and directing the calcined preheated raw meal to the rotary kiln.

The use of a second tower in parallel with the existing one is a well-known configuration for the pre-calciner kiln, i.e. US 5,897,702. However in both towers a gas resulting from combustion process and loaded with SO₂ and CO₂ is used to heat-up the cement raw material.

The advantages of the invention are to be seen in that, inter alia, in avoiding calcination of the material fed to the second preheater, a considerably reduction of the specific kiln heat consumption is performed. On the contrary to prior art arrangement of cement plants in which the hot clinker cooler air is one of the main sources of losses, in the proposed new arrangement it is possible to use the hot air of the clinker cooler to a maximum extend. Thus the use of hot cooler air for preheating precalcined material means another reduction of the specific kiln heat consumption. Moreover this air is free from SO₂ thus avoiding or at least significantly reducing the risk of blockages in the preheating zone, as the sulphurous material is introduced directly at the kiln inlet at a temperature greater than 800 C.

Furthermore the new method allows to significantly reduce the flue gas generated per kg of produced clinker and therefore the specific energy associated with the kiln flue gases losses are less. The use of the calcined raw mix according to this method leads to an overall reduction of CO₂ and NOₓ emissions associated with the amount of clinker produced.

In a suggested scenario to produce calcined raw meal for the cement production in a power plant, it is assumed that the power plant delivers power to the grid and produces a mixture of sulfated lime (degree of sulfating around 2-10%) and combustion residues like ash and carbon. Using this lime and the residues as cement raw material makes it possible to reduce considerably the heat consumption associated with the clinker production in the cement plant and at the same time, increase the production of the clinker.

It is known that lime can re-carbonate (CaO + CO₂ → CaO₃) above the 540°C and below the 800°C that is the typical temperature range of the solids in the last cyclones of the pre-heater tower. The new method avoids this problem, as the preheating medium does not contain CO₂.

The method is particularly interesting when the cement plant and the power plant producing the calcined raw mix are not located on the same site or, if located on the same site, when they are not operated in an integrated mode.

It is particularly expedient if the cement plant has several production lines, one of which is shut down, to use the preheater of the closed line as the second preheater for heating up the calcined raw meal.

If the first and the second preheater are multistage suspension type preheaters including a plurality of serially connected cyclones separators, and if the calcining of the raw mix feedstock preheated in the first preheater occurs in the rotary kiln, it is a preferred method to feed the uncalcined raw mix feedstock preheated in the first preheater into the riser tube connecting the clinker cooler to the lowermost cyclone of the second preheater. This cyclone then operates as a homogenizer, facilitating the mixture between hot calcined and hot uncalcined raw mix.

A portion of calcined raw meal might be added to the uncalcined raw mix in the riser tube of the uppermost cyclone of the first preheater. This calcined material performs at least partially a desulfurization of the kiln exhaust gases close to their exit of the preheater tower.

### Brief description of the invention

A more complete appreciation of the invention and many of the attendant advantages thereof will be readily obtained as the same becomes better understood by reference to the following detailed description when considered in connection with one exemplary embodiment schematically shown in the accompanying drawing.
- Fig. 1: illustrates an embodiment of the increased cement production;
- Fig. 2: illustrates the preparation of the calcined raw mix in a power plant with a circulating fluidized bed steam generator;
- Fig. 3: illustrates a preferred embodiment of the solids flow in the area of the kiln feed end

Only the elements essential for understanding the invention are shown. Arrows illustrate the flow direction of the working media.

### Description of the preferred embodiment

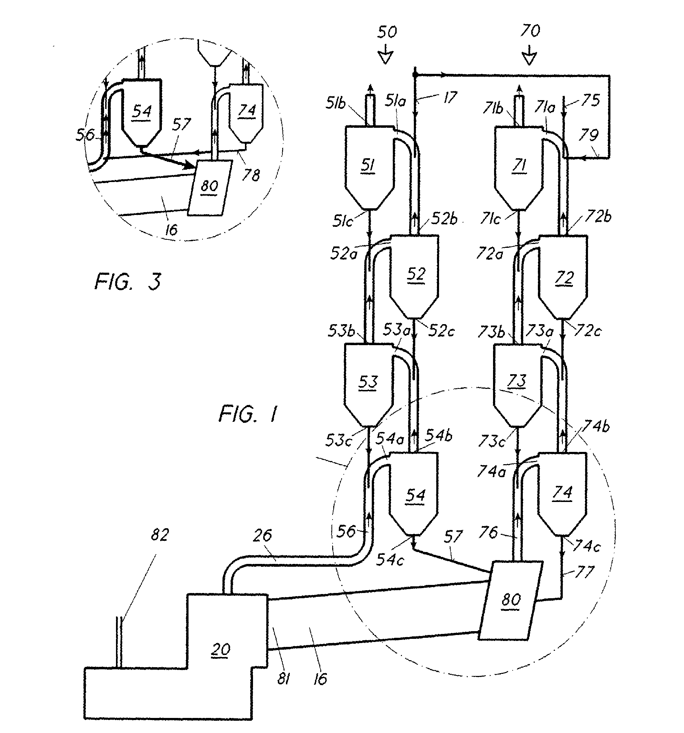

Referring to Fig. 1, the existing equipment necessary for performing the cement production consists mainly of a raw mix preheater 70, a rotary kiln 16 and a clinker cooler 20.

The preheater is a vertically arranged multi-stage suspension type apparatus including a plurality of serially connected cyclone type gas/solids separators 71-74. The cyclones each have an inlet 71a-74a for gas and entrained cement raw mix, an outlet 71b-74b for separated gas and an outlet 71c-74c for separated solids. The preheater is equipped with an inlet 75 for cement raw mix. This inlet 75 is arranged in the conduit connecting the inlet 71a for gas and entrained cement raw meal of the uppermost cyclone 71 to the outlet 72b for separated gas of the adjacent cyclone 72. Solids being separated in cyclone 71 flow down into a conduit connecting the gas outlet of cyclone 73 to the inlet of the adjacent lower cyclone 72. In this conduit the solids are entrained and conveyed to cyclone 72, where they are separated. Thus solids are moving down to the next lower cyclone 73 and 74. During the alternate entrainment and separation process, the hot gases supplied to the preheater tower from the rotary kiln 16 via riser duct 76 heat up the raw mix. This kiln exhaust gas flows through the preheater in countercurrent relation to the flow of the raw mix, i.e. from cyclone 74 to cyclone 73, to cyclone 72 and finally to cyclone 71. Spent preheating gases leave the uppermost cyclone 71 via outlet 71b to a known dedusting system.

In this example it is supposed to calcine the raw mix from preheater tower 70 within the rotary kiln 16. This kiln has a feed end 80 and a discharge end 81 with a combustion zone near the discharge end. The preheated raw mix is supplied to the feed end via a line 77.

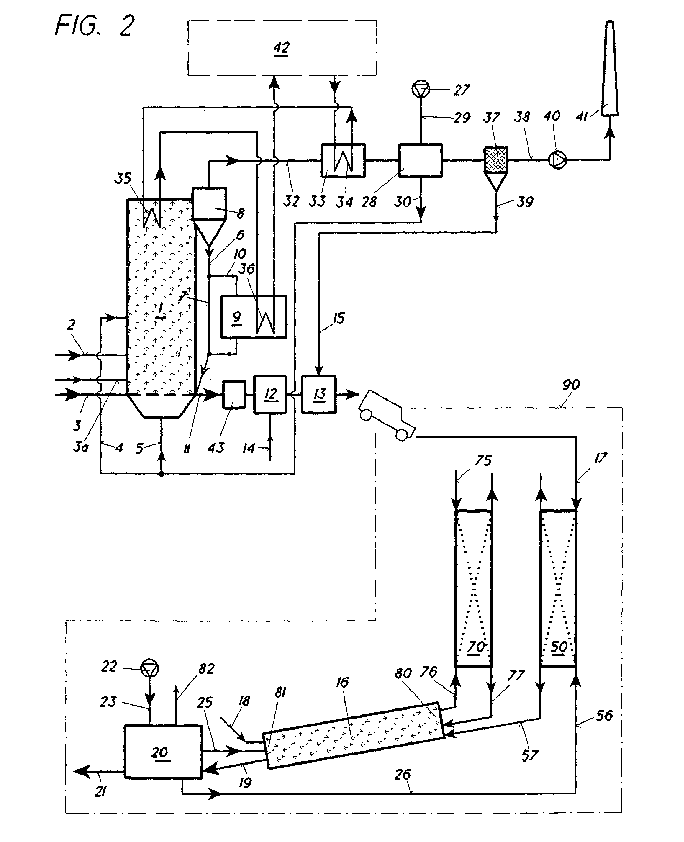

In the rotary kiln 16, the preheated raw mix is first calcined and then burned into cement clinker. As shown in Fig. 2, for combustion in the kiln 16, a small amount of fuel, i.e. coal is injected via a burner 18 together with primary air in line 25 (Fig. 2).

Via air intake lines 23, ambient air is introduced in the system by fans 22 to the clinker cooler and heated therein by cooling down the cement clinker. The heated air exits the clinker cooler in a first stream and is supplied to the kiln 16 as kiln combustion (secondary) air. The cement clinker is then forwarded from the discharge end 45 of the kiln into the cement cooler 20, which might be a moving grate. The cooled clinker is finally supplied via line 21 to a cement silo, which is not shown.

So far, cement production and the apparatus involved are known. It is now intended to increase the clinker production in this existing plant by using at least the preheater tower 70 and the kiln 16.

According to the invention this is done by feeding calcined raw meal - consisting essentially of lime and combustion residues like ash, carbon and desulfurization residues - in a second preheater 50, in which process air from the clinker cooler 20 is directed in countercurrent flow to the direction of flow of the calcined raw meal, and directing the calcined preheated raw meal to the rotary kiln.

If the cement plant has several parallel production lines, one of them can be shut down. The preheater of the closed line can then be connected to the still operating line and can be used for heating up the calcined raw meal. If only one production line exists, a new second preheater 50 has to be erected.

The second preheater 50 can also be a vertically arranged multistage suspension type preheater including a plurality of serially connected cyclone type gas solids separators 51-54. The cyclones each have an inlet 51a-54a for air and entrained calcined raw mix, an outlet 51b-54b for separated air and an outlet 51c-54c for separated solids. The preheater is equipped with an inlet 17 for calcined raw mix. This inlet 17 is arranged in the conduit connecting the inlet 51a for air and entrained calcined raw meal of the uppermost cyclone 51 to the outlet 52b for separated air of the adjacent cyclone 52. Solids being separated in cyclone 51 flow down into a conduit connecting the air outlet of cyclone 53 to the inlet of the adjacent lower cyclone 52. In this conduit the solids are entrained and conveyed to cyclone 52, where they are separated. Thus solids are moving down to the next lower cyclones 53 and 54. During the alternate entrainment and separation process, the raw mix is heated up by the air preheated in the clinker cooler 20 and supplied to the preheater tower via tertiary air line 26 and via riser duct 56. This air flows through the preheater in counter-current relation to the flow of the raw mix, i.e. from cyclone 54 to cyclone 53, to cyclone 52 and finally to cyclone 51. Spent preheating air leave the uppermost cyclone 51 via outlet 51b to a known dedusting system.

In a preferred embodiment shown in Fig. 3 the raw mix feedstock preheated in the first preheater 70 is fed via line 78 into the riser tube 56 connecting the clinker cooler 20 to the lowermost cyclone 54 of the second preheater 50, in order to mix it with the preheated calcined meal and to homogenize the mixture in suspension in the lowermost cyclone 54. In this case the riser duct 56, the cyclone 54 and the feed line 57 have to be designed according to the overall flow.

Due to the increased amount of produced clinker, it is understood that the clinker cooler 20 has to be replaced by a larger apparatus in order to perform his function.

In another embodiment of the invention some calcined raw meal is added to the uncalcined raw mix in the conduit connecting the inlet 71a for gas and entrained cement raw mix of the uppermost cyclone 71 to the outlet 72b for separated gas of the adjacent cyclone 72. This calcined raw mix can be taken from the feed line 17 of the second preheater via a line 79. The calcium oxide reacts with evaporated SO₂ from the kiln gas stream to form calcium sulfites, which are separated from the gas stream in the cyclone and directed to the downstream cyclones 72-74 back into the kiln. The idea is to add the calcium oxide in a temperature area wherein SO₂ gases are first evaporated from the cement raw meal.

The clinkering of the supplemental amount of precalcined raw mix in the kiln produces additional kiln exhaust gases. In order to keep at least approximately constant the amount of kiln exhaust gases, the amount of uncalcined raw mix fed to the first preheater 70 is reduced.

Fig. 2 illustrates in a simplified block diagram the clinker making process and shows how the calcined raw meal, consisting essentially of sulfated lime and combustion residues like ash and carbon, is produced in the combustor of a power plant

Via air intake line 29 a fan 27 sucks the major portion of ambient air in the system. This air is preheated in an air preheater 28. Via line 30 the air is fed to the combustor 1, in which it penetrates via a fluidizing air supply 5 and a secondary or overbed air supply 4.

Depending on the apparatus type, the gas/air mixture can be introduced into the combustor on different levels. In the example shown on the drawing, in which the reactor is an upright circulating fluidized-bed steam generator with a flow stream from bottom to top, the fluidizing air is introduced at the bottom through an air distributor. The secondary air is fed through one or more elevations of ports in the lower combustor. The reactor is provided with four other inlets. One carbonaceous residue supply line 6, one inlet 2 for the coal and two inlets 3 and 3a for the raw cement mix.

Coal is introduced mechanically or pneumatically to the lower portion of the reactor via supply 2. This coal can be either crushed or pulverized. Like the air, coal may be injected on different levels of the reactor. If the coal is in form of crushed material with a size of approximately 6-mm, it can be fed by gravity.

Combustion takes place throughout the combustor, which is filled by bed material. Flue gas and entrained solids leave the combustor and enter one or more cyclones 8, where the solids are separated.

The flue gas and the fly ash exit the gas outlet of the separation device 8 via a flue gas line 32. These separated gases are further treated before disposal. They are first cooled down in a gas cooler 33, thereby heating up water in an economizer 34 integrated in the water/steam cycle of a steam turbine island 42. In order to avoid recarbonation of the lime, the gases in line 32 are cooled at a fast rate, i.e. greater than 30°C/sec. Downstream the gases are further cooled in the air preheater 28. The gas is supposed to leave this gas cooler 28 with a temperature of about 100-150°C. Downstream the gas cooler a solids filter 37 is provided in the line 38 to remove from the gas all the remaining solids. This filter 37 could be a fabric filter or an electrostatic precipitator. A fan 40 is installed in the gas line exiting the filter, preferably on the clean side of the filter 37. Its purpose is to control the pressure in the system close to atmospheric conditions. The cleaned gas leaves the system via the stack 41. The solids separated in the filter 37 are fed via line 39 to an appropriate location in the cement system.

The solids separated in the cyclone 8 are recycled to the combustor via line 6. The major portion is directly returned to the fluidizing bed via line 7. Some solid is diverted via line 10 to an external fluidized-bed heat exchanger 9 and then added to the portion in line 7. The bed temperature in the combustor 1 is essentially uniform and is maintained at an optimum level for sulfur capture and combustion efficiency by heat absorption in the walls of the combustor. In the present example the heat exchange is supposed to occur in an evaporator 35. Superheating of the steam and - for large steam turbine units with a reheat cycle - reheating is performed preferably by further heat removal from the hot solids absorption in the fluidized-bed heat exchanger 9 and/or in the gas-cooler 33. This heat exchanger 9 is containing immersed tube bundles. The flow rate of the solids through apparatus 9 via line 10 can be used to control the steam temperature. The produced superheated steam is fed to the turbine island 42 comprising at least one steam turbine driving a generator producing electrical power. Additional steam is produced for the turbine in the clinker cooler 20 from cooling the hot clinker discharged from the kiln 16 via line 19.

Sulfur compounds in the fuel or in the cement raw materials are mainly released in the CFB reactor 1 as SO₂. In traditional CFB steam production units, the amount of limestone needs to be minimized - Ca/S molar ratio typically around 2 - to minimize operating costs. In the present method, Ca/S molar ratios greater than 3can be used in the CFB to improve the sulfur capture from flue gas exiting the system via stack 41. No attendant increase in operating costs results since a very high amount of calcium relative to sulfur is inherent in the cement clinker making process.

The CFB is now used for a coproduction of steam and calcined raw mix for the cement production, in which coproduction the ashes of the power production are used to replace part of the cement raw mix in the cement production. Indeed coal ashes are similar in composition to calcined clays. Moreover all of the coal residues are converted into cement; the sulfur is absorbed by clinker component CaO.

As described above, two inlets 3 and 3a for the raw cement mix are provided in the reactor 1. Via line 3, a part of limestone is fed into the reactor in pulverized form; typically 90% of the limestone particles are smaller than 90 microns, the size being appropriate for the cement clinkering process. Via line 3a the remaining part of crushed limestone is introduced to form bed and circulating material. At temperatures above about 800°C, limestone CaCO₃ is calcined into CaO. CaO combines with SO₂ released from coal combustion and oxygen to form gypsum CaSO₄. SO₂ can be disposed by standard wet or dry scrubbing methods using limestone.

Draining off solids controls solids inventory in the combustor. The hot solids drained of the fluidizing bed via line 11 are cooled down through an ash cooler 43. They are introduced in a grinder 12 in which they are ground to an extent that 90% are below 90 µm. They are mixed with additives introduced in the grinder by a line 14 and with some of the cement raw mix (not shown). These corrective additives are used, if any essential chemical compound needed in the mixture of coal ash and limestone like iron oxide or silica content are not present in the required amount.

The ground material is supplied to a blender 13, in which is added the lime CaO via a supply 15. This amount of lime is constituted by the solids separated in the filter 37 and is fed via line 39. To achieve this amount of lime coming from filter 37, the cyclone 8 is designed to separate the predominant char and crushed cement material from the remaining components. Since the mean size of the ash and the lime is typically smaller than 50µm it will escape the cyclone, while the char and the crushed lime/limestone, which is far greater in size will be retained in the cyclone. Thus the fly ash escaping the cyclone consists predominantly of lime and is forwarded with the flue gas in line 32.

The calcined raw mix of the correct size and composition for cement clinker making is then transported to the cement plant 90. It is understood that the blending process can also take place in the cement plant.

The invention may be illustrated in more detail with reference to a numerical example: it goes without saying that absolute values cannot be specified in connection with the said numerical values with regard to the dimensioning of the involved apparatus, since absolute values are in any case not meaningful enough on account of their dependence on numerous parameters.

For obtaining a clinker output of 34.7 kg/sec, a total airflow of 99 kg/sec, coal in the amount of 2.3 kg/sec, limestone in the amount of 20 kg/sec and calcined raw mix in the amount of 22.5 kg/sec are needed. The relative high amount of coal is due to the fact that about half of the material fed to the kiln has to be first calcined before clinkering.

95 kg/s of ambient air is sucked by fan 22 into the clinker cooler 20 and cools the clinker down to around 70°C. Air in the amount of 30 kg/s leaves the cooler at around 750°C and is fed to the preheater 50. From the air leaving the cooler, 18 kg/s are fed to the kiln via line 25 as combustion (secondary) air. The remaining air leaving the cooler in the amount of 47 kg/sec at 250°C is bypassing the kiln via line 82. This air is dedusted and discharged via a stack.

The gas amount out of the kiln is about 30.8 kg/s at 900°C. After heat exchange in the first preheater tower 70, this gas with a temperature of about 380°C may be used to dry the limestone and inert material in the milling process. Thereafter it is dedusted and discharged at a temperature of about 100°C.

Pulverized limestone and inert material in the ratio 85/15 are fed to the first pre-heater tower in the amount of 20 kg/sec at ambient temperature. If the cement plant would be operated according to prior art, i.e. without second preheater 50, the appropriate amount would be 25 Kg/sec and the cement clinker output would be about 15 Kg/sec. The lower value is chosen in order to keep the amount of kiln gases constant.

The precalcined raw mix of the correct size and composition in the amount of 22.5 kg/sec is introduced into the second preheater 50 at ambient temperature. It is heated up by the cooler air to around 720°C. After heat exchange in the second tower, this air with a temperature of about 280°C may be used to dry the ready raw mix in a milling process, if any. Thereafter it is dedusted and discharged at a temperature of about 100°C.

Thus it is seen that, compared to the prior art operation, the clinker production is now more than doubled, although the feed to the first preheater tower is reduced.

Referring to Fig. 2 it might be that the precalcined raw material produced in the power plant contains some carbon coming from the fly ash. This carbon is separated in the filter 37 with the lime and is added to the bottom ash of the combustor in the blender 13. In this case either the coal amount to the kiln has to be reduced appropriately or the amount of air through the kiln has to be augmented to burn the supplemental carbon.

Obviously, numerous modifications and variations of the present invention are possible in light of the above teachings. It is therefore to be understood that, within the scope of the appended claims, the invention may be practiced otherwise than as specifically described herein.

### List of Designations

- 1: circulating fluidized bed
- 2: hydrocarbon feed line
- 3, 3a: limestone feed line
- 4: secondary (overbed) air line to 1
- 5: fluidizing air supply
- 6: solids return line
- 7: solids return line bypassing 9
- 8: cyclone
- 9: fluidized bed heat exchanger
- 10: solids return line to 9
- 11: hot bed material discharge
- 12: grinder
- 13: blender
- 14: additive supply to 12
- 15: lime supply to 13

- 16: kiln
- 17: calcined material line to 50
- 18: fuel supply to 16, coal
- 19: kiln clinker discharge line. nodules
- 20: clinker cooler
- 21: line to clinker grinder
- 22: fan
- 23: air supply to 20
- 25: air supply to 16

- 27: fan
- 28: air heater
- 29: air supply to air heater
- 30: hot air discharge from air heater air supply to 1
- 32: gas and fly ash line in boiler backpass
- 33: steam heat exchanger
- 34: economizer
- 35: evaporator
- 36: superheater and reheater
- 37: filter, electrostatic precipitator
- 38: gas exhaust line
- 39: lime discharge line from 37
- 40: fan
- 41: stack
- 42: steam turbine island
- 50: second preheater
- 51-54: cyclone
- 51a-54a: inlet for air and entrained cement raw mix
- 51b-54b: outlet for separated air
- 51c-54c: outlet for separated solids
- 26: tertiary air supply to second preheater 50
- 56: riser duct
- 57: feed line to kiln 16
- 70: first preheater
- 71-74: cyclone
- 71a-74a: inlet for gas and entrained cement raw mix
- 71b-74b: outlet for separated gas
- 71c-74c: outlet for separated solids
- 75: inlet for cement raw mix
- 76: riser duct from 16
- 77: feed line to kiln 16
- 78: line from 74 to 54
- 79: lime to first preheater
- 80: feed end
- 81: discharge end
- 82: discharge line
- 90: cement plant

## Claims

1. A method of increasing the clinker output of an existing cement plant with at least one production line, said method comprising the steps of preheating a raw mix feedstock in a first preheater (70) with kiln exhaust gases, calcining the preheated raw mix feedstock, burning the calcined feedstock in a rotary kiln (16) to form clinker, and then cooling the clinker in a clinker cooler (20),
**characterized by** feeding calcined raw meal consisting essentially of lime and combustion residues like ash, carbon and desulfurization residues in a second preheater (50), in which process air from the clinker cooler (20) is directed in countercurrent flow to the direction of flow of the calcined raw meal, and directing the calcined preheated raw meal to the rotary kiln.

2. A process according to claim 1, wherein the cement plant has at least two production lines, one of which is shut down, and that the second preheater (50) for heating up the calcined raw meal is the preheater of the closed line.

3. A process according to claim 1,
- wherein the first and the second preheater (70,50) is a multistage suspension type preheater including a plurality of serially connected cyclone type gas solids separators,
- wherein the calcining of the raw mix feedstock preheated in the first pre-heater (70) occurs in the rotary kiln (16),
- and wherein this raw mix feedstock preheated in the first preheater (70) is fed into the riser tube (56) connecting the clinker cooler (20) to the lowermost cyclone (54) of the second preheater (50).

4. A process according to claim 1, wherein a portion (79) of calcined raw meal is added to the uncalcined raw mix in the riser tube of the uppermost cyclone (71) of the first preheater (70).

5. A process according to claim 1, wherein the amount of the uncalcined raw mix fed to the first preheater (70) is reduced in order to keep at least approximately constant the amount of kiln exhaust gases.
